# EUROPEAN PATENT APPLICATION

(11) **EP 4 700 966 A1**
(43) Date of publication of application: **25.02.2026**
(21) Application number: 23744654.7
(22) Date of filing: 12.05.2023
(51) Int. Cl.: H01M 50/505, H01M 50/559, H01M 50/583

(54) **OUTPUT ELECTRODE COMPOSITE STRUCTURE, CCS ASSEMBLY AND BATTERY MODULE**

(30) Priority: 20.04.2023 CN 202320910819 U
(71) Applicant: Eve Energy Co. Ltd., Huizhou, Guangdong 516000 (CN)
(72) Inventor: YANG, Shuai, Huizhou, Guangdong 516000 (CN)
(74) Representative: Patentanwälte Olbricht Buchhold Keulertz
(86) International application number: PCT/CN2023/094053
(87) International publication number: WO 2024/216690

(57) **Abstract**

An output pole integrated structure, a CCS assembly, and a battery module are provided. The output pole integrated structure is arranged at an input end or an output end of a battery group, and includes: an output bar electrically connected to an external device; and a protective bar connected between the output bar and the input end of the battery group, or connected between the output bar and the output end of the battery group. The protective bar is configured to conduct the battery group and the output bar and provided with fuse protection structures.

## Description

This application claims priority to Chinese Patent Application No. 202320910819.6, filed on April 20, 2023. The aforementioned application is herein incorporated by reference in its entirety.

### TECHNICAL FIELD

The present disclosure relates to the field of battery technologies, and in particular, to output pole integrated structures, CCS assemblies, and battery modules.

### BACKGROUND

A cylindrical power battery in related art realizes an electrical signal transmission with a battery management system (BMS) and an external device through an electrical connection between a cell contact system (CCS) assembly and a battery. Herein, the CCS assembly includes an insulation support bracket, an output bar, a busbar, and a signal collection structure. The CCS assembly is installed on a battery group, and the busbar is arranged on a top of the battery group to realize a series connection within a single row of batteries and a parallel connection between multiple rows of batteries. The output bar is arranged at an end of the battery group, is electrically connected to an input end or an output end of the battery group, and is configured to conduct a current of the entire battery group.

Since a space between the batteries in the battery group is narrow, a remaining space is limited. In order to adjust to the space inside the battery group, a structural width and a structural thickness of the busbar are limited. However, in the related art, a fuse protection of a cylindrical power battery module is generally implemented by arranging a fuse structure on the busbar which is configured to realize the series and parallel connections of the batteries. However, due to limitation of a structural strength of the busbar configured to realize the series and parallel connections of the batteries, after the fuse structure is formed on the busbar, the strength of the busbar is prone to be further reduced, thus reducing an impact strength of the entire CCS assembly.

### SUMMARY OF THE INVENTION

The present disclosure provides output pole integrated structures, CCS assemblies, and battery modules, which are capable of improving a structural strength and an impact strength of the CCS assembly.

For this purpose, the present disclosure adopts the following technical solutions:
In an aspect, an output pole integrated structure is provided according to embodiments of the present disclosure. The output pole integrated structure is applied to a CCS assembly, the output pole integrated structure is connected to an input end or an output end of a battery group, and includes: an output bar electrically connected to an external device; a protective bar connected between the output bar and the input end of the battery group, or connected between the output bar and the output end of the battery group; the protective bar is configured to conduct the battery group and the output bar and provided with fuse protection structures.

In another aspect, a CCS assembly is provided according to embodiments of the present disclosure. The CCS assembly includes a support bracket, a busbar arranged on the support bracket, and two output pole integrated structures mentioned above; and the two output pole integrated structures are respectively arranged at opposite ends of the busbar along a length direction of the busbar and are connected to the support bracket.

In another aspect, a battery module is provided according to embodiments of the present disclosure. The battery module includes at least one battery group and the CCS assembly mentioned above, the CCS assembly is arranged on a top of the battery group and is electrically connected with the battery group.

### BENEFICIAL EFFECTS

In the related art, the fuse structure is arranged on the busbar at the top of the battery group. Since the busbar configured to realize the series and parallel connections of the batteries is complicated and the structural strength of the busbar is weak, so a preparation of the entire busbar is complicated and a high accuracy is required during a manufacturing process of the busbar, which leads to higher costs, lower yield rate, and weaker structural strength of the busbar, thereby leading to weaker structural strength and poor impact strength of the entire CCS assembly. Compared with the related art, in the embodiments of the present disclosure, the output pole integrated structure is arranged at the input end or the output end of the battery group, and the fuse protection structure is arranged on the protective bar in the output pole integrated structure. For the manner of arranging the fuse protection structure on the protective bar, since the entire output pole integrated structure is arranged at an end of the battery group to conduct the current in the entire battery group, and the output pole integrated structure is a structure with higher strength and has a larger operation space, so it may be easier to form the fuse protection structure on the protective bar, which may improve production efficiency and product yield. At the same time, an entire shaped structure of the output pole integrated structure may still maintain a certain strength, so a structural strength of the entire CCS assembly may be ensured when the output pole integrated structure is applied to the CCS assembly, and the impact strength of the CCS assembly may be ensured when it is applied to a new energy vehicle, which may ensure a better anti-seismic effect.

### DESCRIPTION OF DRAWINGS

FIG. 1 is a schematic structural view of a single battery according to some embodiment of the present disclosure.
FIG. 2 is a schematic structural view of a CCS assembly according to some embodiment of the present disclosure.
FIG. 3 is a schematic structural view of an output pole integrated structure according to some embodiment of the present disclosure.
FIG. 4 is an exploded schematic view of the output pole integrated structure in FIG. 3.
FIG. 5 is a schematic structural view of another output pole integrated structure according to some embodiment of the present disclosure.
FIG. 6 is an exploded schematic view of the output pole integrated structure in FIG. 5.

Reference numerals:
100, output pole integrated structure; 10, output bar; 20, protective bar; 21, fuse protection structure; 211, conductive strip; 212, gap; 22, main bar; 23, branch bar; 231, piercing hole; 232, bending part; 24, connection piece; 200, single battery; 51, positive pole; 52, negative pole; 300, CCS assembly; 30, busbar; 31, sub-bar; 311, connection point; 40, support bracket.

### EMBODIMENTS OF THE INVENTION

In the description of the present disclosure, it should be noted that, orientations or positional relationships indicated by the terms "upper", "lower", "front", "rear", "left", "right", "vertical", "horizontal", "top", "bottom", "inner", "outer", etc. are based on the orientations or positional relationships shown in the attached drawings, and are only for the convenience of describing the present disclosure and simplifying the description, rather than indicating or implying that the referred devices or elements have certain orientations, or are constructed or operated in certain orientations, and thus should not be construed as limitations on the present disclosure.

Unless otherwise defined, all technical and scientific terms used herein have the same meaning as commonly understood by those skilled in the art. The terms used herein in the description of the present disclosure are for the purpose of describing specific embodiments only, and are not intended to limit the present disclosure.

The present disclosure will be described in further detail below in conjunction with the accompanying drawings.

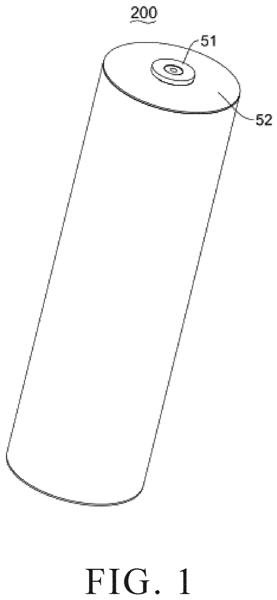

An output pole integrated structure 100 according to the embodiments of the present disclosure is applied to a cylindrical power battery module. Specifically, the output pole integrated structure 100 is a part of a CCS assembly 300. The cylindrical power battery module realizes a current conduction with an external device through the CCS assembly 300. Herein, a structure of a cylindrical single battery 200 in the cylindrical power battery module is illustrated in FIG. 1. The single battery 200 includes a positive pole 51 and a negative pole 52.

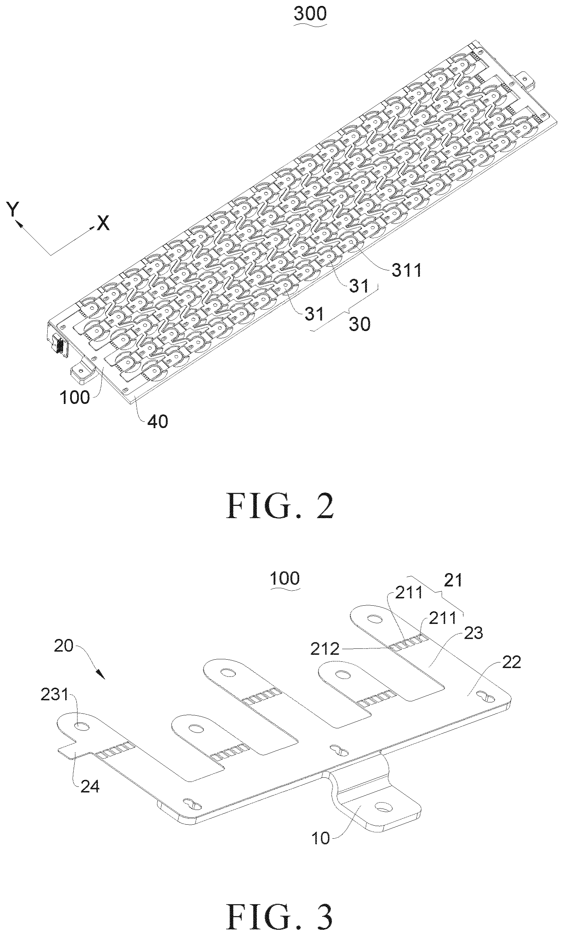

Referring to FIG. 2, the CCS assembly 300 includes a busbar 30 and two output poles respectively located at opposite ends of the busbar 30 along a length direction. The busbar 30 is arranged on a top of a battery group. That the two output poles are respectively arranged at opposite ends of the busbar 30 in the length direction refers to that the two output poles are respectively arranged at opposite ends of the battery group. The two output poles are electrically connected to the single batteries 200 arranged at an input end and an output end of the battery group, respectively. Herein, one of the two output poles refers to the positive pole 51 connected with the single battery 200, and the other one of the two output poles accordingly refers to the negative pole 52 connected with the single battery 200.

Specifically, the battery group in each cylindrical power battery module includes a plurality of sub-battery groups arranged along a Y direction, and each sub-battery group includes a plurality of single batteries 200 arrayed in a X direction. Every two adjacent single batteries 200 in each sub-battery group are connected in series, and multiple rows of the sub-battery groups are connected in parallel.

It should be noted that the length direction of the busbar 30 in the embodiments refers to an arrangement direction of the single batteries 200 in the sub-battery group, that is, the X direction.

Therefore, when the busbar 30 having a plurality of sub-bars 31 is arranged, each sub-bar 31 is connected to the plurality of single batteries 200 in multiple rows of sub-battery groups, so as to realize a parallel connection of adjacent sub-battery groups. Multiple sub-bars 31 arranged side by side along the X direction realize a series connection of the single batteries 200 in each sub-battery group. Due to a compact structure and an order arrangement of the battery group, a structural strength of each sub-bar 31 is limited and a structure of each sub-bar 31 is complicated corresponding to a narrow space inside the battery group and a staggered arrangement of the single batteries 100. Therefore, when adjusting to the narrow space inside the battery group, each sub-bar 31 has a short width and a thin thickness, leading to a weak structural strength. That is, a weak structural strength of the entire busbar 30 might result in a weak structural strength of the entire CCS assembly 300. When the cylindrical power battery module is applied to a new energy vehicle, an impact strength of the entire busbar 30 may also be weak during the operation of a new energy vehicle, and an impact strength of the entire CCS assembly 300 may also be relatively weak. At the same time, in the related art, a fuse structure is provided on each sub-bar 31 of the busbar 30 to protect the battery group, which may further reduce the structural strength of the sub-bar 31, so that the structural strength of the entire busbar 30 may be further reduced to lower the safety.

However, with respect to the structure in which each sub-bar 31 in the busbar 30 is connected with the plurality of single batteries 200, since the two output poles arranged at the ends of the battery group are required to be connected with the plurality of sub-battery groups to gather the current flowing through each sub-battery group, i.e. the current of the entire battery group, the two output poles are needed to be disposed in a large arrangement space and may be provided with higher structural strength. For example, compared to the busbar 30, the output pole may have a larger thickness in a height direction of the single battery 100 and a larger width in the length direction X of the battery group.

Therefore, according to the structural characteristics of the two output poles, the output pole integrated structure 100 is provided according to the embodiments of the present disclosure as the aforementioned output pole. By arranging a fuse protection structure 21 on the output pole integrated structure 100, a protective effect on the battery group may be realized, and the structural strength of the entire CCS assembly 300 may be improved, so as to improve the impact strength of the entire CCS assembly 300, and at the same time facilitate the improvement of a molding efficiency of the output pole integrated structure 100 and the improvement of product yield.

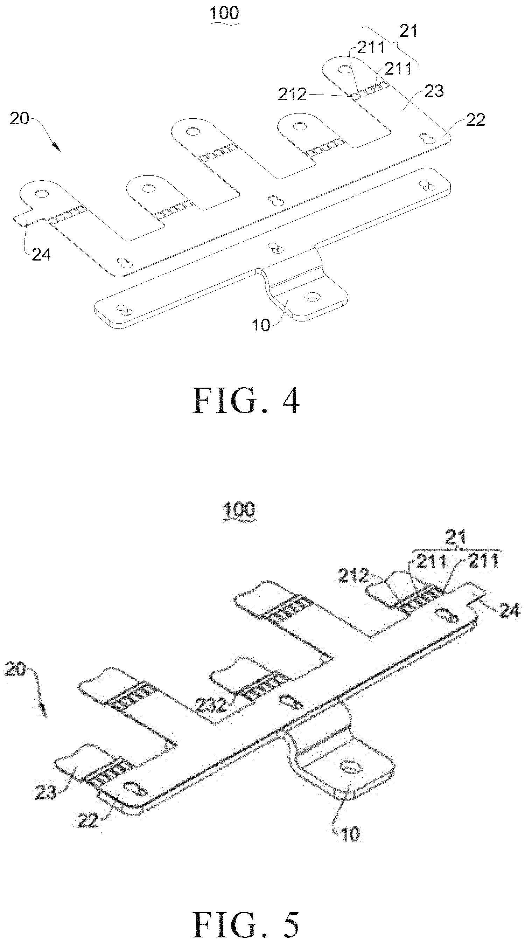

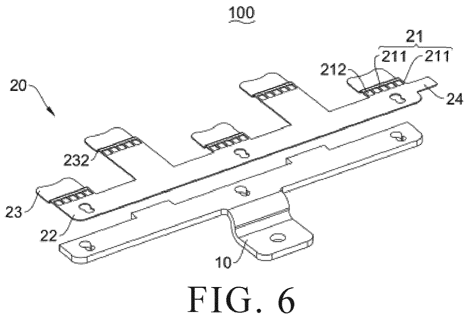

Referring to FIG. 2 to FIG. 6, the output pole integrated structure 100 provided according to the embodiments of the present disclosure is connected to the input end or output end of the battery group. The output pole integrated structure 100 includes an output bar 10 and a protective bar 20.

The output bar 10 is electrically connected to an external device. The protective bar 20 is connected between the output bar 10 and the input end of the battery group, or between the output bar 10 and the output end of the battery group, thereby realizing conduction between the battery group and the output bar 10. The fuse protection structure 21 is arranged on the protective bar 20.

The above-mentioned output pole integrated structure 100 is arranged at the input end or output end of the battery group, and the protective bar 20 in the output pole integrated structure 100 is provided with the fuse protection structure 21. For the manner of arranging the fuse structure on the busbar 30 at the top of the battery group in the related art, since the series-parallel structure of the busbar 30 is complicated and the structural strength of the busbar 30 is weak, so the preparation of the entire busbar 30 is complicated and the higher accuracy is required during a manufacturing process of the busbar 30, which leads to higher costs, lower yield rate, and weaker structural strength of the busbar 30, thereby leading to weaker structural strength and poor impact strength of the entire CCS assembly. Compared with the related art, the fuse protection structure 21 is arranged on the protective bar 20 according to the embodiments of the present disclosure. Since the entire output pole integrated structure 100 is arranged at the end of the battery group to conduct the current in the entire battery group, and the output pole integrated structure is a structure with higher strength and has a larger operation space, so it may be easier to form the fuse protection structure 21 on the protective bar 20, which may improve production efficiency and product yield. At the same time, the entire shaped structure of the output pole integrated structure 100 may still maintain a certain strength, so the structural strength of the entire CCS assembly 300 may be ensured when the output pole integrated structure 100 is applied to the CCS assembly 300, and the impact strength of the CCS assembly 300 may be ensured when it is applied to a new energy vehicle, which may ensure a better anti-seismic effect.

Referring to FIG. 3 to FIG. 6, in an embodiment of the present disclosure, on a condition that the fuse protection structure 21 is specifically formed on the protective bar 20, the fuse protection structure 21 includes a plurality of conductive strips 211. There is a gap 212 between every two adjacent conductive strips 211, that is, the conductive strips 211 are separated by the gap 212. Therefore, by arranging the conductive strips 211 on the protective bar 20, an overcurrent cross-sectional area of a position of the protective bar 20 where the conductive strips 211 are placed may be reduced, so that a resistance value of the position of the protective bar 20 where the conductive strips 211 are placed may be increased. According to the Joule heat formula Q=I²Rₜ, on a condition that one single battery 100 in the battery group suffers from thermal runaway, and on a condition that an incoming current is too large, the heat at the position of the protective bar 20 where the fuse protection structure 21 is placed may be increased rapidly; and on a condition that the heat reaches a fusing value of the conductive strip 211, the protective bar 20 may be fused, and the large current may not be transferred from the battery group to other battery groups, thereby achieving a protection effect on the entire battery module and improving the safety performance of the entire battery module.

Specifically, since the cylindrical power battery module includes multiple sub-battery groups arranged in the Y direction and the output pole integrated structure 100 flows the current of the multiple sub-battery groups arranged in the Y direction, so corresponding to the structures of the plurality of sub-battery groups, the protective bar 20 includes a main bar 22 and a plurality of branch bars 23 connected to the main bar 22. The main bar 22 is connected to the output bar 10, and each branch bar 23 is electrically connected to one sub-battery group and provided with the fuse protection structure 21. Therefore, on a condition that one single battery 100 in one sub-battery group suffers from thermal runaway and generates a large current, the fuse protection structure 21 of the branch bar 23 corresponding to the sub-battery group may be fused, and the large current may not be conducted to other sub-battery groups by this sub-battery group; and on a condition that a large current flows through one battery module, the fuse protection structure 21 in the battery module may be fused, and the large current may not flow to other battery modules, thereby achieving the protection effect on the entire battery pack.

When the protective bar 20 and the output bar 10 are connected, the protective bar 20 and the output bar 10 are connected by welding according to the present embodiment, that is, the main bar 22 and the output bar 10 are connected by welding. Therefore, a fixation and a current conduction between the output bar 10 and the protective bar 20 may be realized through the welding connection, the structural strength of the entire output pole integrated structure 100 may be ensured, and the forming of the entire output pole integrated structure 100 may be facilitated.

Furthermore, since the entire output pole integrated structure 100 needs to have a relatively large thickness, at the same time, it needs to be connected to the single battery 200, and the protective bar 20 is connected to the battery group, so the output bar 10 has a thickness greater than a thickness of the protective bar 20 in corresponding to a spatial position where the protective bar 20 is connected to the battery group. Therefore, the thinner protective bar 20 may match an installation space of the battery group, that is to facilitate the connection between the protective bar 20 and the positive pole 51 or the negative pole 52 of the battery group, and at the same time, the fuse protection structure 21 provided on the thinner protective bar 20 may be fused quickly when a short circuit occurs. At the same time, the thicker output bar 10 may have sufficient capacity to flow a large current.

Specifically, in order to ensure an overcurrent strength and the structural strength of the entire output pole integrated structure 100, the thickness of the output bar 10 ranges from 3.0 mm to 5.0 mm, and the thickness of the protective bar 20 ranges from 0.3 mm to 0.8 mm. Therefore, the output bar 10 may have sufficient structural strength, and the fuse protection structure 21 on the protective bar 20 may be fused quickly when the current is large. At the same time, the protective bar 20 may match the structure of the battery group, so that the protective bar 20 may be connected to the positive pole 51 or the negative pole 52 of the single battery 200 without occupying much space in the height direction of the single battery 200.

For example, in some embodiments, the thickness of the output bar 10 is 3.0 mm, 3.5 mm, 4.0 mm, 4.5 mm, or 5.0 mm, etc., which might not be enumerated exhaustively here. Of course, in other embodiments, the thickness of the output bar 10 may also be set to other dimensions within this range, which is not specifically limited in the embodiments. In some embodiments, the thickness of the protective bar 20 may be 0.3 mm, 0.4 mm, 0.5 mm, 0.6 mm, 0.7 mm, or 0.8 mm, etc., which might not be enumerated exhaustively here. Of course, in other embodiments, the thickness of the protective bar 20 may also be set to other dimensions within this range, which is not specifically limited in the embodiments.

In a specific embodiment of the present disclosure, the thickness of the output bar 10 is 4.0 mm, and the thickness of the protective bar 20 is 0.5 mm, which may ensure the overcurrent strength and structural strength of the output bar 10, facilitate a fusing effect of the fuse protection structure 21 of the protective bar 20, and facilitate the thickness of the protective bar 20 matching with a height of the single battery 200.

In addition, referring to FIG. 3 to FIG. 6, since the BMS is required to monitor a battery usage status when the battery module is operated, such as monitoring an output voltage of the battery module or a real-time usage temperature, and a signal transmission between the battery module and the BMS is realized by the CCS assembly 300, so the CCS assembly 300 needs to collect a voltage signal and a temperature signal of the battery group. Generally, when the voltage of each sub-battery group is collected, it is realized by a nickel sheet, and the nickel sheet is electrically connected with the single battery 100. In the embodiments, in order to facilitate the installation of the nickel sheet, the protective bar 20 of the present embodiment is provided with a connection piece 24 for connecting the nickel sheet. Therefore, the protective bar 20 is convenient to connect with the nickel sheet by arranging the connection piece 24, thereby collecting various voltages of the sub-battery groups.

Referring to FIG. 2, embodiments of the present disclosure also provide a CCS assembly 300, including a support bracket 40, a busbar 30, and two output pole integrated structures 100 described above.

The two output pole integrated structures 100 are respectively disposed at opposite ends of the busbar 30 along the length direction of the busbar 30, and are connected to the support bracket 40. Herein, the length direction of the busbar 30 is the arrangement direction of the single batteries in each sub-battery group, that is, the X direction.

Therefore, one output pole integrated structure 100 is configured to input a current, that is, it is connected with the single battery 200 at the input end of the battery group; and the other output pole integrated structure 100 is configured to output a current, that is, it is connected with the single battery 200 at the output end of the battery group. The busbar 30 is arranged on the top of the battery group to realize series and parallel connections of the batteries in the battery group, so as to realize the current conduction of the entire battery group.

Specifically, the busbar 30 includes a plurality of sub-bars 31 arranged in an array along array directions of the single batteries 200. That is, for the sub-bars 31 arranged side by side along the X direction, each includes five connection points 311, so that the parallel connection of five sub-battery groups might be achieved. In other embodiments, other numbers of the connection points 311 of the sub-bars 31 may be provided as required.

Each sub-battery group in the embodiments includes eighteen single batteries 200 arranged along the X direction. That is, the CCS assembly 300 is configured to connect each row of eighteen single batteries 100 in series and five rows in parallel to form one battery module. The battery modules are connected through high-voltage copper bars.

It might be understood that, corresponding to the structure of the five rows of sub-battery groups, the protective bar 20 includes five branch bars 23, and each branch bar 23 is electrically connected to the single battery 200 at the end of one sub-battery group.

It should be noted that, since the two output pole integrated structures 100 are respectively connected to the single batteries 200 at the input end and the output end of the battery group, that is, respectively connected to the positive pole 51 or the negative pole 52 of the single batteries 200, so the protective bar 20 has connection structures in corresponding to different structures of the positive pole 51 and the negative pole 52 of the cylindrical battery. For example, when a protective bar 20 is connected to the positive pole 51 of the single battery 200 of the battery group, the branch bar 23 of the protective bar 20 is correspondingly provided with a piercing hole 231 for passing through the positive pole 51; and when another protective bar 20 is connected to the negative pole 52 of the single battery 200 of the battery group, the branch bar 23 of the protective bar 20 is correspondingly provided with a bending part 232, so that an end of the branch bar 23 is lower than the main bar 22 in a height direction of the battery group to connect with the negative pole 52 of the single battery 200. That is, because a shell of the single battery 200 is the negative pole, it is convenient to connect the end of the branch bar 23 to the shell.

Embodiments of the present disclosure also provide a battery module, including one or more battery groups and the above-mentioned CCS assembly 300. The CCS assembly 300 is arranged on the top of the battery group and is electrically connected to the battery group.

## Claims

1. An output pole integrated structure, applied to a cell contact system (CCS) assembly, arranged at an input end or an output end of a battery group, and comprising:
an output bar, electrically connected to an external device; and
a protective bar, connected between the output bar and the input end of the battery group, or connected between the output bar and the output end of the battery group,
wherein the protective bar is configured to conduct the battery group and the output bar and provided with fuse protection structures.

2. The output pole integrated structure according to claim 1, wherein each of the fuse protection structures comprises a plurality of conductive strips, and there is a gap between every two adjacent conductive strips of the plurality of conductive strips.

3. The output pole integrated structure according to claim 1 or claim 2, wherein a thickness of the output bar is greater than a thickness of the protective bar.

4. The output pole integrated structure according to claim 3, wherein the thickness of the output bar ranges from 3.0 mm to 5.0 mm, and the thickness of the protective bar ranges from 0.3 mm to 0.8 mm.

5. The output pole integrated structure according to claim 1 or claim 2, wherein the output bar and the protective bar are welded.

6. The output pole integrated structure according to claim 1 or claim 2, wherein the protective bar comprises a main bar and a plurality of branch bars connected to the main bar; the main bar is connected to the output bar; each of the branch bars is electrically connected to the battery group; and each of the branch bars is provided with one of the fuse protection structures.

7. The output pole integrated structure according to claim 6, wherein on a condition that each of the branch bars is connected to a positive pole of a single battery of the battery group, a piercing hole is defined on each of the branch bars; and
on a condition that each of the branch bars is connected to a negative pole of a single battery of the battery group, each of the branch bars is provided with a bending part, and an end of each of the branch bars connected with the single battery is lower than the main bar in a height direction of the battery group.

8. The output pole integrated structure according to claim 1 or claim 2, wherein the protective bar is provided with a connection piece for connecting a nickel sheet.

9. A CCS assembly, comprising:
a support bracket;
a busbar arranged on the support bracket; and
two output pole integrated structures as claimed in any one of claims 1-8, wherein the two output pole integrated structures are respectively arranged at opposite ends of the busbar along a length direction of the busbar and are connected to the support bracket.

10. A battery module, comprising:
a battery group; and
the CCS assembly as claimed in claim 9, wherein the CCS assembly is arranged on a top of the battery group and is electrically connected with the battery group.
